(19) Europäisches Patentamt / European Patent Office / Office européen des brevets

(11) **EP 3 774 963 B1**

(12) **EUROPÄISCHE PATENTSCHRIFT**

(45) Veröffentlichungstag und Bekanntmachung des Hinweises auf die Patenterteilung:
**12.04.2023  Patentblatt 2023/15**

(21) Anmeldenummer: **19710431.8**

(22) Anmeldetag: **19.03.2019**

(51) Internationale Patentklassifikation (IPC):
*C08G 18/48* (2006.01)      *C08G 18/66* (2006.01)
*C08G 18/76* (2006.01)      *C08G 18/18* (2006.01)
*C08G 18/22* (2006.01)      *C08G 18/30* (2006.01)
*C08G 18/32* (2006.01)      *C08G 18/40* (2006.01)
*C08G 18/42* (2006.01)      *C08K 5/523* (2006.01)
*C08K 3/016* (2018.01)      *C08L 75/04* (2006.01)
*C08G 101/00* (2006.01)      *C08K 3/02* (2006.01)
*C08J 9/14* (2006.01)      *C08G 18/16* (2006.01)
*C08J 9/00* (2006.01)

(52) Gemeinsame Patentklassifikation (CPC):
**C08G 18/4238; C08G 18/163; C08G 18/1816;
C08G 18/225; C08G 18/3281; C08G 18/4018;
C08G 18/4216; C08G 18/4812; C08G 18/4837;
C08G 18/485; C08G 18/6614; C08G 18/7664;
C08J 9/0023; C08J 9/0038; C08J 9/0061;   (Forts.)**

(86) Internationale Anmeldenummer:
**PCT/EP2019/056751**

(87) Internationale Veröffentlichungsnummer:
**WO 2019/192832 (10.10.2019 Gazette 2019/41)**

(54) **HERSTELLUNG VON FLAMMWIDRIGEN PUR-/PIR-HARTSCHAUMSTOFF**

PRODUCTION OF NON-FLAMMABLE PUR/ PIR HARD FOAM

FABRICATION DE MOUSSES DURES PUR/PIR RÉSISTANTES AUX FLAMMES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2018   EP 18165398**

(43) Veröffentlichungstag der Anmeldung:
**17.02.2021   Patentblatt 2021/07**

(73) Patentinhaber: **Covestro Intellectual Property GmbH & Co. KG**
**51373 Leverkusen (DE)**

(72) Erfinder:
• **ALBACH, Rolf**
**51061 Köln (DE)**
• **SCHEDLER, Michael**
**51381 Leverkusen (DE)**

(74) Vertreter: **Levpat**
**c/o Covestro AG**
**Gebäude 4825**
**51365 Leverkusen (DE)**

(56) Entgegenhaltungen:
**US-A- 6 054 499     US-A1- 2014 066 532**

EP 3 774 963 B1

(52) Gemeinsame Patentklassifikation (CPC): (Forts.)
**C08J 9/141; C08K 5/523;** C08G 2110/0025;
C08J 2203/14; C08J 2205/052; C08J 2205/10;
C08J 2375/04; C08K 2003/026

**Beschreibung**

Die vorliegende Erfindung betrifft flammgeschützte Polyurethan-Hartschaumstoffe bzw. Polyurethan-/Polyisocyanurat-Hartschaumstoffe (im Folgenden einzeln oder gemeinsam auch als "PUR-/PIR-Hartschaumstoffe" bezeichnet), sowie Verfahren zu ihrer Herstellung und die Verwendung des erfindungsgemäßen Flammschutzmittelgemisches in System zur Herstellung von PUR-/PIR-Hartschaumstoffen.

So wie alle organischen Polymere sind auch PUR-/PIR-Hartschaumstoffe brennbar, wobei die große Oberfläche pro Masseneinheit in Schaumstoffen dieses Verhalten noch verstärkt. PUR-/PIR-Hartschaumstoffe werden häufig als Isolationsmaterialien eingesetzt, beispielsweise als Dämmstoff in der Bauindustrie. In vielen Einsatzgebieten von PUR-/PIR-Hartschaumstoffen ist daher eine Brandschutzausrüstung durch zugesetzte Flammschutzmittel erforderlich. Es gibt dabei Flammschutzmittel, die die Flamme in der Gasphase ersticken und es gibt Flammschutzmittel, die die Oberfläche des polymeren Werkstoffes schützen, indem sie die Verkohlung fördern oder einen glasartigen Überzug bilden. Als Flammschutzmittel werden halogenhaltige Verbindungen sowie Stickstoff- und Phosphorverbindungen bevorzugt eingesetzt. Verbindungen, die Halogene enthalten, und niedervalente Phosphorverbindungen gelten als typische Vertreter der Flammschutzmittel, die Flammen ersticken. Höhervalente Phosphorverbindungen sollen eine katalytische Spaltung der Polyurethane bewirken und dadurch zur Bildung einer festen, polyphosphathaltigen, verkohlten Oberfläche führen. Diese Intumeszenzschicht schützt das Material vor weiterer Verbrennung (G.W. Becker, D. Braun: Polyurethane. In: G. Oertel (Ed.), Kunststoff Handbuch, München, Carl Hanser Verlag, 1983, 2, 104-1-5).

Ein Nachteil insbesondere der halogenhaltigen Vertreter dieser Klassen ist allerdings, dass sie giftig und relativ flüchtig sind und so aus dem Schaumstoff migrieren können (J.C. Quagliano, V.M. Wittemberg, I.C.G. Garcia: Recent Advances on the Utilization of Nanoclays and Organophosphorus Compounds in Polyurethane Foams for Increasing Flame Retardancy. In: J. Njuguna (Ed.), Structural Nanocomposites, Engineering Materials, Berlin Heidelberg, Springer Verlag, 2013, 1, 249-258) und bei der Verwendung im Verbrennungsprozess korrosive Halogenwasserstoffsäure entsteht.

Aufgrund der zunehmenden Verbreitung von organischen Halogenverbindungen mit teilweise gesundheitsschädlicher Wirkung in der Umwelt richtet sich das Interesse auf halogenfreie Alternativen, z.B. auf halogenfreie Phosphatester und Phosphitester (S.V. Levchik, E.D. Weil: A Review of Recent Progress in Phosphorus-based Flame Retardants, J. Fire Sci., 2006, 24, 345-364) und auf roten Phosphor.

Am weitesten verbreitet sind PUR- und PIR-Schaumstoffe, die mit organischen Phosphaten wie Tris(2-chlorisopropyl)phosphat (TCPP) und Triethylphosphat (TEP) flammwidrig eingestellt sind. Auch organische Phosphonsäureester wie Dimethylpropanphosphonat (DMPP, DE 44 18 307 A1) oder Diethylethylphosphonat (DEEP, US 5,268,393) sind als halogenfreie Flammschutzmittel für PUR-/PIR-Hartschaumstoffe auf Isocyanatbasis beschrieben. Festes Ammoniumpolyphosphat wurde ebenfalls bereits als Flammschutzmittel eingesetzt (US 2014/066532 A1 und US 5,470,891).

Aber auch diese halogenfreien Alternativen haben Nachteile: Teilweise sind sie empfindlich gegenüber Hydrolyse unter den für PUR-/PIR-Schaumstoffsysteme typischen alkalischen Bedingungen, die Wirksamkeit ist nicht zufriedenstellend oder haben einen weichmachenden Effekt. Roter Phosphor weist Nachteile auf, z.B. im Hinblick auf schnelle Absorption von Feuchtigkeit und schnelle Oxidation, was zu einem Verlust des Flammschutzes und ggf. zur Bildung giftiger Phosphine führt, und neigt außerdem zu Pulverexplosionen. Oft wird roter Phosphor mikroverkapselt um diese Probleme zu beseitigen. (L. Chen, Y.-Z. Wang: A review on flame retardant technology in China. Part 1: development of flame retardants, Polym. Adv. Technol., 2010, 21, 1-26).

JP 2007-277295 A beschreibt die Nutzung von polycyclischen Phosphatestern mit mindestens 3 Benzolringen, wie z. B. Trikresylphosphat, als Flammschutzmittel in der Herstellung von PUR-Hartschaumstoffen.

In den Patentschriften WO 2014/039488 A, US 2014/0066532 und WO 2014/055318 A wird zwar die mögliche Verwendung einer Verbindung der allgemeinen Formel (I) oder (II) als Flammschutzmittel offenbart, eine Verbesserung wichtiger mechanischer Eigenschaften wie der Dimensionsstabilität unter warmen Bedingungen wird jedoch nicht beschrieben. Auch US 6,054,499, die einen halbharten, offenzelligen Montageschaum beschreibt, gibt keinerlei Hiweis auf einen Einfluss des Flammschutzmittels auf die mechanischen Eigenschaften, insbesondere nicht auf die Dimensionsstabilität unter warmen Bedingungen.

Die Aufgabe der vorliegenden Erfindung ist es, die Herstellung von PUR-/PIR-Hartschaumstoffen mit halogenfreien Flammschutzmitteln zu ermöglichen, wobei die PUR-/PIR-Hartschaumstoffe einen guten Flammschutz und verbesserte mechanische Eigenschaften aufweisen. Insbesondere soll das erfindungsgemäße Verfahren zu PUR-/PIR-Hartschaumstoffen führen, die gegenüber PUR-/PIR-Hartschaumstoffen aus dem Stand der Technik eine erhöhte Druckfestigkeit und eine verbesserte Dimensionsstabilität besitzen.

Diese Aufgabe konnte gelöst werden durch ein Verfahren zur Herstellung von PUR-/PIR-Hartschaumstoffen umfassend die Umsetzung eines Reaktionsgemisches enthaltend

**A1** eine Isocyanat-reaktive Komponente

**A2** Treibmittel

**A3** Katalysator

**A4** gegebenenfalls Additiv

**A5** Flammschutzmittel

**B** eine Isocyanatkomponente,

das dadurch gekennzeichnet ist, dass

das Flammschutzmittel **A5** mindestens zwei phosphorhaltige Verbindungen enthält, wobei mindestens eine der beiden Verbindungen die allgemeine Formel

$$R^1R^2(O)P\text{-}[O\text{-}R^5\text{-}R^6\text{-}O\text{-}P(O)R^3]_nR^4 \qquad (I)$$

oder

$$R^1R^2(O)P\text{-}[O\text{-}R^5\text{-}X\text{-}R^6\text{-}O\text{-}P(O)R^3]_nR^4 \qquad (II)$$

aufweist, wobei

X = für eine Alkylen-Gruppe, $N\text{-}R^7$, O, CO, S, SO, $SO_2$ oder $P\text{-}R^7$ steht,

n = für eine ganze Zahl von 0 bis 4, bevorzugt 1 oder 2 steht,

$R^1$, $R^2$, $R^3$, $R^4$ = jeweils für eine Aryl-O-, Aryl- oder Alkyl-Gruppe steht,

$R^5$, $R^6$ = jeweils für eine Arylen-Gruppe steht,

$R^7$ = für eine Aryl-O-, Aryl- oder Alkyl-Gruppe steht, wobei die mindestens eine Verbindung mit der allgemeinen Formel (I) oder (II) in einem Oligomerengemisch eingesetzt wird und n im Mittel den Wert $\overline{n}$ = 0,80 bis 4,00, bevorzugt 0,90 bis 2,00, besonders bevorzugt 1,25 bis 1,75.

Überraschenderweise wurde gefunden, dass die erfindungsgemäßen PUR-/PIR-Hartschaumstoffe mit einem Flammschutzmittelgemisch enthaltend zwei phosphorhaltige Verbindungen, wobei mindestens eine Verbindung die allgemeine Formel (I) oder (II) aufweist, nicht nur einen guten Flammschutz besitzen, sondern auch die Druckfestigkeit und Dimensionsstabilität der PUR-/PIR-Hartschaumstoffe gegenüber PUR-/PIR-Hartschaumstoffen aus dem Stand der Technik verbessert wird.

Als Isocyanat-reaktive Komponente **A1** wird mindestens eine Verbindung ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt. Bevorzugt sind Polyesterpolyole und/oder Polyetherpolyole. Die Isocyanat-reaktive Komponente **A1** kann bevorzugt eine Hydroxylzahl zwischen 25 bis 800 mg KOH/g, insbesondere 50 bis 500 mg KOH/g und besonders bevorzugt 100 bis 300 mg KOH/g aufweisen. Vorzugsweise weist die einzelne Polyolkomponente ein zahlenmittleres Molekulargewicht von 50 g/mol bis 2000 g/mol, besonders bevorzugt 100 g/mol bis 1000 g/mol, insbesondere 400 g/mol bis 700 g/mol und ganz besonders bevorzugt 450 g/mol bis 600 g/mol auf. Die Funktionalität der Isocyanat-reaktiven Komponente A1 kann beispielsweise zwischen 1,0 bis 8,0, bevorzugt, 1,0 bis 6,0, insbesondere 1,0 bis 4,0 und besonders bevorzugt 1,5 bis 3,0 liegen.

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Das Äquivalentgewicht gibt das Verhältnis der zahlenmittleren Molekularmasse und der Funktionalität der Isocyanat-reaktiven Komponente an. Die Angaben des Äquivalentgewichts für Mischungen berechnen sich aus Äquivalentgewichten der einzelnen Komponenten in ihren jeweiligen molaren Anteilen und beziehen sich auf das zahlenmittlere Äquivalentgewicht der Mischung.

Die Polyesterpolyole der Komponente **A1** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z.B. Di-, Tri- oder sogar Tetracarbonsäuren, oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden. Bevorzugt verwendet werden Phthalsäureanhydrid, Terephthalsäure und/oder Isophthalsäure.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Trimellitsäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Phthalsäure, Terephthalsäure, Glutarsäure Adipinsäure, Sebacinsäure und/oder Bernsteinsäure, besonders bevorzugt Adipinsäure, Phthalsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S. 55 ff. (Kap. 4: Oligo-Polyols for Elastic Polyurethanes), S. 263 ff. (Kap. 8: Polyester Polyols for Elastic Polyurethanes) und insbesondere auf S. 321 ff. (Kap. 13: Polyether Polyols for Rigid Polyurethane Foams) und S. 419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2 910 585 A1, [0024]-[0041], beschrieben. Beispiele zu Polycarbonatpolyolen und ihre Herstellung finden sich unter anderem in der EP 1 359 177 A1. Die Herstellung geeigneter Polyetheresterpolyole ist unter anderem in der WO 2010/043624 A und in der EP 1 923 417 A beschrieben.

Weiterhin können in der Isocyanat-reaktiven Komponente **A1** niedermolekulare Isocyanat-reaktive Verbindungen enthalten sein, insbesondere können di- oder trifunktionelle Amine und Alkohole, besonders bevorzugt Diole und/oder Triole mit Molmassen $M_n$ kleiner als 400 g/mol, vorzugsweise von 60 bis 300 g/mol, zum Einsatz kommen, z.B. Triethanolamin, Diethylenglykol, Ethylenglykol und Glycerin. Sofern zur Herstellung der Polyurethan-Hartschaumstoffe solche niedermolekularen Isocyanat-reaktiven Verbindungen Anwendung finden, z.B. in der Funktion als Kettenverlängerungsmittel und/oder Vernetzungsmittel kommen diese zweckmäßigerweise in einer Menge von bis zu 10 Gew.-%, bezogen auf das Gesamtgewicht der Komponente **A1**, zum Einsatz.

Neben den oben beschriebenen Polyolen und Isocyanat-reaktiven Verbindungen können in der Komponente **A1** weitere Isocyanat-reaktive Verbindungen enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Die Komponente **A1** kann aus einer oder mehreren der oben genannten Isocyanat-reaktiven Komponenten bestehen.

Als Treibmittel **A2** kann physikalisches Treibmittel eingesetzt werden, wie beispielsweise niedrig siedende organische Verbindungen, wie z.B. Kohlenwasserstoffe, halogenierte Kohlenwasserstoffe, Ether, Ketone, Carbonsäureester oder Kohlensäureester. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z. B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und halogenierte Kohlenwasserstoffe, wie z. B. Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden. Vorzugsweise werden Kohlenwasserstoffe eingesetzt, die eine untere Explosionsgrenze von < 1,9% besitzen. Die untere Explosionsgrenze gibt dabei die niedrigste Volumenkonzentration des Kohlenwasserstoffs in Luft an, bei der in Anwesenheit einer Zündquelle das Kohlenwasserstoff-Luft-Gemisch explosionsfähig ist. Beispiele für Kohlenwasserstoffe mit einer unteren Explosionsgrenze von < 1,9% sind n-Pentan, Isopentan, Cyclopentan, Butan, Hexan, 2-Methylpentan und Penten. Besonders bevorzugt handelt es sich bei dem Kohlenwasserstoff mit einer unteren Explosionsgrenze von < 1,9% um ein Alkan.

Als Treibmittel **A2** kann auch chemisches Treibmittel, wie beispielsweise Wasser, Carbonsäure, Carbamate und deren Gemische, verwendet werden. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt.

Vorzugsweise werden keine halogenierten Kohlenwasserstoffe als Treibmittel verwendet.

Als Treibmittel **A2** wird mindestens eine Verbindung, ausgewählt aus der Gruppe bestehend aus physikalischen und chemischen Treibmittel, eingesetzt. Bevorzugt wird nur physikalisches Treibmittel eingesetzt.

Als Katalysator **A3** zur Herstellung der PUR-/PIR-Hartschaumstoffe werden Verbindungen verwendet, welche die Reaktion der reaktiven Wasserstoffatome, insbesondere Hydroxylgruppen enthaltenden Verbindungen mit der Isocyanatkomponente **B** beschleunigen, wie z. B. tertiäre Amine oder Metallsalze. Die Katalysatorkomponenten können dem Reaktionsgemisch zudosiert oder auch ganz oder teilweise in der Isocyanat-reaktiven Komponente **A1** vorgelegt werden.

Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin.

Es können auch Metallsalze wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator **A3** kommen ferner in Betracht: Amidine, wie z. B. 2,3-Dimethyl-3,4,5,6-tetrahydropyrimidin, Tetraalkylammoniumhydroxide, wie z. B. Tetramethylammoniumhydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren. Es besteht auch die Möglichkeit, die Reaktionen ohne Katalyse ablaufen zu lassen. In diesem Fall wird die katalytische Aktivität von mit Aminen gestarteten Polyolen ausgenutzt.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Hartschaumstoffen.

Die oben genannten Katalysatoren können alleine oder in Kombination miteinander eingesetzt werden.

Gegebenenfalls können ein oder mehrere Additive als Komponente **A4** eingesetzt werden. Beispiele für die Komponente **A4** sind oberflächenaktive Substanzen, Schaumstabilisatoren, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Hornblenden, Amphibole, Chrisotil, Montmorillonit und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Erfindungsgemäß enthält das Flammschutzmittel **A5** mindestens zwei phosphorhaltige Verbindungen, wobei mindestens eine der beiden Verbindungen die allgemeine Formel

$$R^1R^2(O)P\text{-}[O\text{-}R^5\text{-}R^6\text{-}O\text{-}P(O)R^3]_nR^4 \qquad (I)$$

oder

$$R^1R^2(O)P\text{-}[O\text{-}R^5\text{-}X\text{-}R^6\text{-}O\text{-}P(O)R^3]_nR^4 \qquad (II)$$

aufweist, wobei

X = für eine Alkylen-Gruppe, $N\text{-}R^7$, O, CO, S, SO, $SO_2$ oder $P\text{-}R^7$ steht,

n = für eine ganze Zahl von 0 bis 4, bevorzugt 1 oder 2, steht,

$R^1$, $R^2$, $R^3$, $R^4$ = jeweils für eine Aryl-O-, Aryl- oder Alkyl-Gruppe steht,

$R^5$, $R^6$ = jeweils für eine Arylen-Gruppe steht,

$R^7$ = für eine Aryl-O-, Aryl- oder Alkyl-Gruppe steht,

wobei die mindestens eine Verbindung mit der allgemeinen Formel (I) oder (II) in einem Oligomerengemisch eingesetzt wird und n im Mittel den Wert $\bar{n}$ = 0,80 bis 4,00, bevorzugt 0,90 bis 2,00, besonders bevorzugt 1,25 bis 1,75, aufweist,
enthaltend ist.

Die Gruppen $R^1$, $R^2$, $R^3$ und $R^4$ der Verbindung mit der allgemeinen Formel (I) oder (II) stehen jeweils für eine Aryl-O-, Aryl- oder Alkyl-Gruppe. Bevorzugt stehen $R^1$, $R^2$, $R^3$ und $R^4$ jeweils für eine Aryl-O-Gruppe. Eine Alkyl-Gruppe kann beispielsweise eine Methyl-, Ethyl-, Butyl-, Propyl- oder Methylpropyl-Gruppe, eine Aryl-Gruppe kann z. B. eine Phenyl-, Naphthyl- oder Phenanthryl-Gruppe, eine Aryl-O-Gruppe beispielsweise eine Phenoxy- oder Naphthoxy-Gruppe sein. Bevorzugt stehen $R^1$, $R^2$, $R^3$ und $R^4$ für eine Phenoxy-Gruppe. Die Gruppen $R^5$ und $R^6$ stehen jeweils für eine Arylen-Gruppe wie z. B. Phenylen-, Naphthylen- oder Biphenylen-Gruppe, bevorzugt Phenylengruppe. Die Gruppe X steht dabei für eine Alkylen-Gruppe, wie z.B. Methylen-, Ethylen-, Propylen-, Butylen-, Methylpropylen-, Methylbutylen oder Isopropylen-Gruppe, bevorzugt Ethylen-, Methylpropylen oder Isopropylen-Gruppe. Die Gruppe $R^7$ der Verbindung mit der allgemeinen Formel (I) oder (II) steht für eine Aryl-O-, Aryl- oder Alkyl-Gruppe. Bevorzugt steht $R^7$ für eine Alkyl-Gruppe. Bei der Verbindung mit der allgemeinen Formel (I) oder (II) steht n für eine ganze Zahl von 0 bis 4, wobei Verbindungen mit der allgemeinen Formel (I) oder (II) als Oligomerengemisch eingesetzt werden. Oligomerengemisch bedeutet hier jeweils ein Gemisch aus Verbindungen mit der allgemeinen Formel (I) oder (II), wobei sich die Verbindungen im Gemisch nur durch den Wert von n unterscheiden. Der im jeweiligen Oligomerengemisch der Verbindungen mit der allgemeinen Formel (I) oder (II) vorliegende molare Mittelwert von n berechnet sich wie folgt:

$$\bar{n} = \sum x_i n_i \text{ mit } x_i = \text{Molenbruch und } n_i = \text{Wert n für das Oligomer i,}$$

und beträgt 0,80 bis 4,00, bevorzugt 0,90 bis 2,00, besonders bevorzugt 1,25 bis 1,75.

Als Verbindung mit der allgemeinen Formel (I) oder (II) wird höchst bevorzugt Bisphenol-A-bis(Diphenylphosphat) eingesetzt.

Der Anteil einer Verbindung mit der allgemeinen Formel (I) oder (II) am Flammschutzmittel **A5** kann z. B. 45,0 Gew.-% bis 95,0 Gew.-%, bevorzugt 80,0 Gew.-% bis 95,0 Gew.-% und besonders bevorzugt 88,0 Gew.-% bis 94,0 Gew.-% betragen, jeweils bezogen auf die Gesamtmasse des Flammschutzmittels **A5**. Der Anteil einer Verbindung mit der Formel (I) oder (II) kann z.B. 5,0 Gew.-% bis 40,0 Gew.-%, bevorzugt 10,0 Gew.-% bis 30,0 Gew.-%, besonders bevorzugt 18,0 Gew.-% bis 28,0 Gew.-%, jeweils bezogen auf die Gesamtmasse der Komponenten **A1** bis **A5**, betragen.

Zusätzlich zu mindestens einer Verbindung mit der Formel (I) oder (II) können als weitere phosphorhaltige Verbindung beispielsweise Phosphate oder Phosphonate, wie z. B. Diethylethylphosphonat (DEEP), Triethylphosphat (TEP), Triphenylphosphat (TPP), Trikresylphosphat, Diphenylkresylphosphat (DPK), Dimethylmethylphosphonat (DMMP), Diethanolaminomethylphosphonsäurediethylester, Diethylhydroxymethylphosphonat, 9,10-Dihydro-9-oxa-10-phosphorylphenanthrene-10-oxid (DOPO) und Dimethylpropylphosphonat (DMPP), sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylendiphosphat eingesetzt werden. Bevorzugt eingesetzt werden Diphenylkresylphosphat, Triethylphosphat oder roter Phosphor.

Weitere geeignete Flammschutzmittel **A5** sind beispielsweise bromierte Ester, bromierte Ether (Ixol) oder bromierte Alkohole wie Dibromneopentylakohol, Tribromneopentylalkohol, Tetrabromphthalat Diol, sowie handelsübliche halogenhaltige Flammschutzpolyole.

Es ist höchst bevorzugt, dass kein halogenhaltiges Flammschutzmittel eingesetzt wird.

Als geeignete Isocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Bevorzugt wird die Isocyanatkomponente **B** ausgewählt aus mindestens einer Verbindung aus der Gruppe bestehend aus MDI, polymeres MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat, mit eingesetzt werden.

Statt oder zusätzlich zu den oben genannten Polyisocyanaten können auch geeignete NCO-Präpolymere als Isocyanatkomponente **B** eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten **A1** beschriebenen Polyolen.

Unter der Isocyanat-Kennzahl (auch Kennzahl, Isocyanat-Index oder Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Es ist möglich, dass im Reaktionsgemisch die Anzahl der NCO-Gruppen im Isocyanat und die Anzahl der gegenüber Isocyanaten reaktiven Gruppen zu einer Isocyanat-Kennzahl von 90 bis 600 führen, bevorzugt zwischen 250 und 450. Diese Isocyanat-Kennzahl liegt bevorzugt in einem Bereich von 300 bis 400 in dem ein hoher Anteil an Polyisocyanuraten (PIR) vorliegt (der Hartschaumstoff wird als PIR-Hartschaumschaumstoff oder PUR-/PIR-Hartschaumstoff bezeichnet) und zu einer höheren Flammwidrigkeit des PUR-/PIR-Hartschaumstoffes selbst führt. Ein anderer bevorzugter Bereich für die Isocyanat-Kennzahl ist der Wertebereich von > 90 bis < 150 (der Hartschaumstoff wird als Polyurethanschaumstoff (PUR-Hartschaumstoff) bezeichnet) in dem der PUR-/PIR-Hartschaumstoff zum Beispiel zu geringerer Sprödigkeit neigt.

Der NCO-Wert (auch: NCO-Gehalt, Isocyanatgehalt) wird bestimmt mittels EN ISO 11909 (Mai 2007). Falls nicht anders angegeben, handelt es sich um Werte die bei 25°C gemessen wurden.

Die Erfindung betrifft ebenfalls einen PUR-/PIR-Hartschaumstoff der durch das erfindungsgemäße Verfahren hergestellt ist.

Die Herstellung der erfindungsgemäßen PUR-/PIR-Hartschaumstoffe erfolgt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden. Beispiele sind in US-A 2 764 565, in G.Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Bevorzugt besitzen die erfindungsgemäßen PUR-/PIR-Hartschaumstoffe einen Phosphoranteil von 5 bis 20 g Phosphor pro Kilogramm Schaumstoff.

Die erfindungsgemäßen PUR-/PIR-Hartschaumstoffe finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Ein weiterer Gegenstand der Erfindung ist demzufolge die Verwendung eines erfindungsgemäßen PUR-/PIR-Hartschaumstoffes als Isolationsschaumstoff und/oder als Haftvermittler in Verbundelementen, wobei die Verbundelemente eine einen erfindungsgemäßen PUR-/PIR-Hartschaumstoff umfassende Schicht und eine Deckschicht umfassen. Die Deckschicht wird hierbei zumindest teilweise von einer den erfindungsgemäßen PUR-/PIR-Hartschaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Die Deckschichten können dabei z.B. Metallbahnen, Kunststoffbahnen oder bis zu 7 mm starke Spanplatten bilden, abhängig vom Einsatzzweck der Verbundelemente. Bei den einen oder zwei Deckschichten kann es sich jeweils um eine flexible Deckschicht, z.B. um eine Aluminium-Folie, Papier, Multischicht-Deckschichten aus Papier und Aluminium oder aus Mineralvließ, und/oder um eine starre Deckschicht, z.B. aus Stahlblech oder Spanplatten, handeln.

In einer ersten Ausführungsform betrifft die Erfindung ein Verfahren zur Herstellung von PUR-/PIR-Hartschaumstoffen umfassend die Umsetzung eines Reaktionsgemisches enthaltend

**A1**    eine Isocyanat-reaktive Komponente

**A2**    Treibmittel

**A3**    Katalysator

**A4** gegebenenfalls Additiv

**A5** Flammschutzmittel

**B** eine Isocyanatkomponente,

das dadurch gekennzeichnet ist, dass

das Flammschutzmittel **A5** mindestens zwei phosphorhaltige Verbindungen enthält, wobei mindestens eine der beiden Verbindungen die allgemeine Formel

$$R^1R^2(O)P\text{-}[O\text{-}R^5\text{-}R^6\text{-}O\text{-}P(O)R^3]_nR^4 \qquad (I)$$

oder

$$R^1R^2(O)P\text{-}[O\text{-}R^5\text{-}X\text{-}R^6\text{-}O\text{-}P(O)R^3]_nR^4 \qquad (II)$$

aufweist, wobei

X = für eine Alkylen-Gruppe, N-$R^7$, O, CO, S, SO, $SO_2$ oder P-$R^7$ steht,

n = für eine ganze Zahl von 0 bis 4, bevorzugt 1 oder 2, steht,

$R^1$, $R^2$, $R^3$, $R^4$ = jeweils für eine Aryl-O-, Aryl- oder Alkyl-Gruppe steht,

$R^5$, $R^6$ = jeweils für eine Arylen-Gruppe steht,

$R^7$ = für eine Aryl-O-, Aryl- oder Alkyl-Gruppe steht,

wobei die mindestens eine Verbindung mit der allgemeinen Formel (I) oder (II) in einem Oligomerengemisch eingesetzt wird und n im Mittel den Wert $\bar{n}$ = 0,80 bis 4,00, bevorzugt 0,90 bis 2,00, besonders bevorzugt 1,25 bis 1,75 aufweist.

In einer zweiten Ausführungsform betrifft die Erfindung ein Verfahren nach der ersten Ausführungsform, dadurch gekennzeichnet, dass in der Isocyanat-reaktiven Komponente **A1** ein Polyesterpolyol enthalten ist.

In einer dritten Ausführungsform betrifft die Erfindung ein Verfahren nach der Ausführungsform 2, dadurch gekennzeichnet, dass in der Isocyanat-reaktiven Komponente **A1** ein Polyesterpolyol und ein Polyetherpolyol mit einem Molekulargewicht von jeweils 50 g/mol bis 2000 g/mol, bevorzugt 100 g/mol bis 1000 g/mol, besonders bevorzugt 400 g/mol bis 700 g/mol und ganz besonders bevorzugt 450 g/mol bis 600 g/mol enthalten sind.

In einer vierten Ausführungsform betrifft die Erfindung ein Verfahren nach einer der Ausführungsformen 2 oder 3, dadurch gekennzeichnet, dass in der Isocyanat-reaktiven Komponente **A1** ein Polyesterpolyol und ein Polyetherpolyol mit einer Funktionalität von jeweils 1,0 bis 6,0, bevorzugt 1,0 bis 4,0, besonders bevorzugt 1,5 bis 3,0 enthalten ist.

In einer fünften Ausführungsform betrifft die Erfindung ein Verfahren nach einer der Ausführungsformen 1 bis 4, dadurch gekennzeichnet, dass das Treibmittel **A2** ausgewählt ist aus einem oder mehreren Verbindungen der Gruppe bestehend aus halogenfreien chemischen Treibmitteln, halogenfreien physikalischen Treibmitteln und (hydro)fluorierten Olefinen.

In einer sechsten Ausführungsform betrifft die Erfindung ein Verfahren nach einer der Ausführungsformen 1 bis 5, dadurch gekennzeichnet, dass das Flammschutzmittel **A5** 45,0 Gew.-% bis 95,0 Gew.-%, bevorzugt 80,0 Gew.-% bis 95,0 Gew.-%, besonders bevorzugt 88,0 Gew.-% bis 94,0 Gew.-%, jeweils bezogen auf die Gesamtmasse des Flammschutzmittels **A5**, eine Verbindung mit der allgemeinen Formel (I) oder (II) enthält.

In einer siebten Ausführungsform betrifft die Erfindung ein Verfahren nach einer der Ausführungsformen 1 bis 6, dadurch gekennzeichnet, dass der Anteil einer Verbindung mit der allgemeinen Formel (I) oder (II) 5,0 Gew.-% bis 40,0 Gew.-%, bevorzugt 10,0 Gew.-% bis 30,0 Gew.-%, besonders bevorzugt 18,0 Gew.-% bis 28,0 Gew.-%, jeweils bezogen auf die Gesamtmasse der Komponenten **A1** bis **A5**, beträgt.

In einer achten Ausführungsform betrifft die Erfindung ein Verfahren nach einer der Ausführungsformen 1 bis 7, dadurch gekennzeichnet, dass das Flammschutzmittel **A5** kein halogenhaltiges Flammschutzmittel enthält.

In einer neunten Ausführungsform betrifft die Erfindung ein Verfahren nach einer der Ausführungsformen 1 bis 8, dadurch gekennzeichnet, dass das Flammschutzmittel **A5** eine Verbindung mit der allgemeinen Formel (I) oder (II)

enthält, wobei $R^1$, $R^2$, $R^3$ und $R^4$ jeweils für eine Aryl-O-Gruppe stehen.

In einer zehnten Ausführungsform betrifft die Erfindung ein Verfahren nach der Ausführungsform 8, dadurch gekennzeichnet, dass das Flammschutzmittel **A5** eine Verbindung mit der allgemeinen Formel (I) oder (II) enthält, wobei $R^1$, $R^2$, $R^3$ und $R^4$ jeweils für eine Phenoxy-Gruppe stehen .

In einer elften Ausführungsform betrifft die Erfindung ein Verfahren nach der Ausführungsform 10, dadurch gekennzeichnet, dass Bisphenol A-bis(diphenyl phosphat) enthaltend ist.

In einer zwölften Ausführungsform betrifft die Erfindung ein Verfahren nach einer der Ausführungsformen 1 bis 11, dadurch gekennzeichnet, dass das Flammschutzmittel **A5** neben einer Verbindung mit der allgemeinen Formel (I) oder (II) ein Flammschutzmittel enthält welches ausgewählt ist aus der Gruppe bestehend aus Diphenylkresylphosphat, Triethylphosphat und roter Phosphor.

In einer dreizehnten Ausführungsform betrifft die Erfindung ein Verfahren nach einer der Ausführungsformen 1 bis 12, dadurch gekennzeichnet, dass die Isocyanatkomponente **B** ausgewählt ist aus mindestens einer Verbindung aus der Gruppe bestehend aus MDI, polymeres MDI und TDI.

In einer vierzehnten Ausführungsform betrifft die Erfindung einen PUR-/PIR-Hartschaumstoff, erhältlich nach dem Verfahren gemäß einer der Ausführungsformen 1 bis 13.

In einer fünfzehnten Ausführungsform betrifft die Erfindung die Verwendung von PUR-/PIR-Hartschaumstoffen nach der Ausführungsform 14 zur Herstellung eines Isolationsmaterials.

In einer sechszehnten Ausführungsform betrifft die Erfindung ein Verfahren nach der ersten Ausführungsform, dadurch gekennzeichnet, dass das Reaktionsgemisch enthält

**A1** ein Polyesterpolyol mit einem zahlenmittleren Molekulargewicht von 50 g/mol bis 2500 g/mol und einer Hydroxylzahl von 50 mg KOH/g bis 400 mg KOH/g,

**A2** Treibmittel, enthaltend eine Verbindung ausgewählt aus der Gruppe bestehend aus halogenfreien chemischen Treibmitteln, halogenfreien physikalischen Treibmitteln und (hydro)fluorierten Olefinen,

**A3** Katalysator, enthaltend Alkalicarboxylat,

**A4** Additiv, enthaltend einen Schaumstabilisator

**A5** Flammschutzmittel, enthaltend eine Verbindung mit der allgemeinen Formel (I) oder (II),

wobei

X = für eine Alkylen-Gruppe, $N-R^7$, O, S, SO, $SO_2$ oder $P-R^7$ steht,

n = für eine ganze Zahl von 0 bis 2,00 steht,

$R^1$, $R^2$, $R^3$ und $R^4$ = jeweils für eine Phenoxy-Gruppe steht,

$R^5$ und $R^6$ = jeweils eine Arylen-Gruppe steht,

$R^7$ = für eine Alkyl-Gruppe steht,

wobei die mindestens eine Verbindung mit der allgemeinen Formel (I) oder (II) in einem Oligomerengemisch eingesetzt wird und n im Mittel den Wert $\bar{n}$ = 0,80 bis 2,00 aufweist,

und mindestens eine Verbindung ausgewählt aus der Gruppe bestehend aus Phosphate und Phosphonate,

**B** monomeres und polymeres MDI.

In einer siebzehnten Ausführungsform betrifft die Erfindung ein Verfahren nach der ersten Ausführungsform, dadurch gekennzeichnet, dass das Reaktionsgemisch enthält

**A1** 50 Gew.-% bis < 90 Gew.-% eines oder mehrerer Polyesterpolyole und 5 Gew.-% bis 20 Gew.-% eines oder mehrerer Polyetherpolyole, jeweils bezogen auf das Gesamtgewicht der Komponente **A1**,

**A2** physikalische Treibmittel,

**A3**    Katalysator,

**A4**    gegebenenfalls Additiv,

**A5**    Flammschutzmittel, enthaltend eine Verbindung mit der allgemeinen Formel (I) oder (II) und eine Verbindung ausgewählt aus der Gruppe bestehend aus Diphenylkresylphosphat, Triethylphosphat und roter Phosphor ,

**B**    polymeres Isocyanat.

In einer achtzehnten Ausführungsform betrifft die Erfindung ein Verfahren nach einer der Ausführungsformen 1 bis 13, dadurch gekennzeichnet, dass das Treibmittel **A2** aus mindestens einen Kohlenwasserstoff mit einer unteren Explosionsgrenze <1,9 % und gegebenenfalls chemischen Treibmitteln besteht.

Die bevorzugten Ausführungsformen können einzeln oder auch miteinander verknüpft ausgeführt werden.

**Beispiele**

**1. Edukte**

| | |
|---|---|
| A1-1 | Polyesterpolyol aus Glutarsäure, Bernsteinsäure, Adipinsäure, Ethylenglykol und Diethylenglykol mit einer Funktionalität von 2 und einem Molekulargewicht von 520 g/mol |
| A1-2 | Polyesterpolyol aus Phthalsäure, Adipinsäure, Ethylenglykol und Diethylenglykol mit einer Funktionalität von 2 und einem Molekulargewicht von 460 g/mol |
| A1-3 | Polyetherpolyol auf 1,2-Propylenglykol gestartet mit 70 Gew.-% Propylenoxid und 29 Gew.-% Ethylenoxid, Funktionalität von 2 und einem Molekulargewicht von 4000 g/mol |
| A1-4 | Polyetherpolyol aus Propylenoxid mit einer Startermischung aus Sorbit und Glyzerin, Funktionalität von 4,5 und einem Molekulargewicht von 600 g/mol |
| A1-5 | Triethanolamin |
| A2-1 | n-Pentan |
| A2-2 | Wasser |
| A3-1 | 25 Gew.-% Kaliumacetat in Diethylenglykol (Katalysator) |
| A3-2 | Dimethylcyclohexylamin (Katalysator) |
| A4-1 | Polyether-modifiziertes Polydimethylsiloxan (Schaumstabilisator) |
| A5-1 | Bisphenol-A-bis(diphenyl phosphat) (Fyroflex® BDP, Fa. ICL Industrial Products) mit einem mittleren Wert von $\bar{n}$ = 1,50 |
| A5-2 | Roter Phosphor (Fa. Acros) |
| A5-3 | Diphenylkresylphosphat DPK |
| A5-4 | Resorcinyldiphenylphosphat RDP (Fyrolflex RDP, Fa. ICL) |
| A5-5 | Triethylphosphat (Disflammol TEP, Lanxess) |
| B-1 | polymeres MDI mit 31,5 Gew.-% NCO-Gruppen und einer Viskosität von 700 mPa*s bei 25°C |

**Herstellung und Prüfung der PUR-/PIR-Hartschaumstoffe**

Die Flammenausbreitung der PUR-/PIR-Hartschaumstoffe wurde durch Kantenbeflammung mit dem Kleinbrennertest nach DIN 4102-1 (Mai 1998) an einer 18 cm × 9 cm × 2 cm großen Probe gemessen. Die zerstörte Probenlänge ist dabei ein Maß für die Flammschutzeigenschaften des eingesetzten Flammschutzmittels, wobei eine kürzere zerstörte Probenlänge für einen besseren Flammschutz steht.

Die Druckfestigkeit der PUR-/PIR-Hartschaumstoffe wurde nach DIN EN 826 (Mai 2013) an Probenkörpern mit den Maßen 50 mm × 50 mm × 50 mm durchgeführt. Es wurde dabei die Druckfestigkeit der Probenkörper in Aufschäumrichtung und quer zur Aufschäumrichtung gemessen.

Die Messung der Rohdichte wurde nach der DIN EN ISO 845 (Oktober 2009) durchgeführt.

Zur Messung der Dimensionsstabilität der PUR-/PIR-Hartschaumstoffe wurden Probenkörpern mit den Maßen 5 cm × 5 cm × 5 cm in den drei Raumrichtungen mittig vermessen. Die Probenkörper wurden 22 Stunden bei 100°C in einem Umlufttrockenschrank gelagert und nach dem Abkühlen der Probenkörper auf 20°C erneut vermessen. Die Dimensionsstabilität@ 100°C entspricht dem geometrischen quadratischen Mittel aus den Veränderungen der Seitenlängen in drei Richtungen bei 100°C über 22 Stunden.

Die Offenzelligkeit der PUR-/PIR-Hartschaumstoffe wurde mit einem Accupyk-1330-Gerät an Probenkörpern mit den Maßen 5 cm × 3 cm × 3 cm nach DIN EN ISO 4590 (August 2003) gemessen.

Zur Bestimmung des Phosphoranteils der erhaltenen PUR-/PIR-Hartschaumstoffe wird der Gewichtsanteil von Phosphor in phosphorhaltigen Verbindungen im Reaktionsgemisch berechnet und auf die Gesamtmasse des Reaktionsgemisches bezogen.

Auf Basis der Polyolkomponenten wurden im Labor PUR-/PIR-Hartschaumstoffe durch die Vermischung von 0,3 dm$^3$ eines Reaktionsgemisches in einem Pappbecher hergestellt. Dazu wurden der jeweiligen Polyolkomponente das Flammschutzmittel, der Schaumstabilisator, Katalysatoren und n-Pentan als Treibmittel zugesetzt und kurz gerührt. Die erhaltene Mischung wurde mit dem Isocyanat vermischt und das Reaktionsgemisch in eine Papierform (3 × 3 × 1 dm$^3$) gegossen und darin ausreagiert. Die genauen Rezepturen der einzelnen Versuche sind in der Tabelle 1 bzw. Tabelle 2 (Zusammensetzung der Reaktionsmischungen) wiedergegeben, ebenfalls die Ergebnisse der physikalischen Messungen an den erhaltenen Proben (Tabelle 1 bzw. 2, physikalische Eigenschaften).

**Tabelle 1: Zusammensetzung der Reaktionsmischungen (Beispiele 1- 4)**

| Beispiele | | 1* | 2 | 3* | 4 |
|---|---|---|---|---|---|
| A1-1 | Gew.-Tle | 23,8 | 23,8 | 22,8 | 22,8 |
| A1-2 | Gew.-Tle | 21,5 | 21,5 | 20,6 | 20,6 |
| A1-3 | Gew.-Tle | 6,3 | 6,3 | 6 | 6 |
| A1-4 | Gew.-Tle | 32,6 | 32,6 | 31,1 | 31,1 |
| A1-5 | Gew.-Tle | 5,0 | 5,0 | 4,8 | 4,8 |
| A2-1 | Gew.-Tle | 3,6 | 3,6 | 4,2 | 4,2 |
| A2-2 | Gew.-Tle | 3,1 | 3,1 | 3 | 3 |
| A3-1 | Gew.-Tle | 1,0 | 1,0 | 1 | 1 |
| A3-2 | Gew.-Tle | 1,0 | 1,0 | 1 | 1 |
| A4-1 | Gew.-Tle | 3,1 | 3,1 | 3 | 3 |
| **Flammschutzmittel** | | | | | |
| A5-1 | Gew.-Tle | | 18,0 | | 27,8 |
| A5-2 | Gew.-Tle | 2,5 | 2,5 | 2,5 | 2,5 |
| A5-3 | Gew.-Tle | 19,3 | | 27,8 | |
| **Isocyanat** | | | | | |
| B-1 | Gew.-Tle | 181,9 | 181,9 | 174 | 174 |
| Kennzahl | | 148,5 | 148,5 | 148,5 | 148,5 |
| * Vergleichsbeispiel | | | | | |

**Tabelle 1 (Fortsetzung, physikalische Eigenschaften Beispiele 1 - 4)**

| Beispiele | | 1* | 2 | 3* | 4 |
|---|---|---|---|---|---|
| **Physikalische Eigenschaften** | | | | | |
| Liegezeit | s | 17 | 15 | 16 | 15 |
| Abbindezeit $t_G$ | s | 37 | 35 | 36 | 35 |
| Klebfreizeit | s | 98 | 78 | 78 | 65 |
| Rohdichte aus dem Kern | kg/m$^3$ | 37,3 | 38,0 | 38,3 | 38,9 |
| Dimensionsstabilität@ 100°C | % | 1,1 | 0,6 | 5,1 | 0,6 |
| Offenzelligkeit | % | 6 | 6 | 6,5 | 6,1 |

(fortgesetzt)

| Beispiele | | 1* | 2 | 3* | 4 |
|---|---|---|---|---|---|
| **Physikalische Eigenschaften** | | | | | |
| Druckfestigkeit in Aufschäumrichtung | kPa | 333 | 354 | 328 | 350 |
| Druckfestigkeit quer zur Aufschäumrichtung | kPa | 155 | 184 | 145 | 181 |
| Phosphorgehalt im Schaumstoff (berechnet) | g/kg[1)] | 19,5 | 18,5 | 18,1 | 16,5 |
| Zerstörte Probenlänge nach DIN 4102 | Mm | 88 | 89 | 97 | 94 |
| * Vergleichsbeispiel<br>[1)] Masse an Phosphor in Gramm (g) bezogen auf die Summe der Massen von A1 bis A5 und B = 1 Kilogramm (kg). | | | | | |

Tabellen 1 und 2 zeigen den Einsatz von erfindungsgemäßen Flammschutzmittelgemischen im Vergleich gegenüber Flammschutzmittelgemischen welche repräsentativ für den Stand der Technik sind. In den Vergleichsbeispielen 1 und 3 werden jeweils polycyclische Phosphatester mit Benzolringen als Substituenten (DPK, A5-3), welche jedoch keine Verbindungen der allgemeinen Formel (I) oder (II) sind, in Kombination mit rotem Phosphor verwendet. Der Einsatz eines erfindungsgemäßen Flammschutzmittelgemisches enthaltend eine Verbindung der allgemeinen Formel (I) oder (II) in dem erfindungsgemäßen Beispiel 2 führt zu einem PUR-/PIR-Hartschaumstoff mit einem vergleichbaren Flammschutz wie beim PUR-/PIR-Hartschaumstoff von Vergleichsbeispiel 1. Die Druckfestigkeit des erfindungsgemäßen PUR-/PIR-Hartschaumstoffes quer zur Aufschäumrichtung sowie in Aufschäumrichtung steigt jedoch an und die Dimensionsstabilität des PUR-/PIR-Hartschaumstoffes verbessert sich. Der gleiche Effekt ist zwischen dem PUR-/PIR-Hartschaumstoff des Vergleichsbeispiels 3 und des erfindungsgemäßen Beispiels 4 zu sehen, wobei der Flammschutz des PUR-/PIR-Hartschaumstoffes des erfindungsgemäßen Beispiels 4 gegenüber dem PUR-/PIR-Hartschaumstoff des Vergleichsbeispiels 3 verbessert ist.

Vergleich erfindungsgemäßes Flammschutzmittelgemisch vs, Resorcinyldiphenylphosphat

In den folgenden Beispielen 5 - 8 werden erfindungsgemäße Formulierungen enthaltend das Flammschutzmittelgemisch A5-1 [Bisphenol-A-bis(diphenylphosphat) (BDP)] / A5-3 [Diphenylkresylphosphat (DPK)] bzw. A5-1 (BDP) / A5-5 [Triethylphosphat (TEP)] verglichen mit nicht erfindungsgemäßem Formulierungen enthaltend als Flammschutzmittel A5-5 [Resorcinyldiphenylphosphat (RDP)] bzw. eine Mischung RDP/DPK.
Die Formulierungen gemäß Tabelle 2 wurden analog den Beispielen 1-4 zu Polyurethanschaumstoffen mit der Kennzahl 148,5 verarbeitet und ausgeprüft.

**Tabelle 2 Zusammensetzung der Reaktionsmischungen und Eigenschaften der Schäume (Beispiele 5 - 8)**

| Beispiele | | 5* | 6* | 7 | 8 |
|---|---|---|---|---|---|
| A1-1 | Gew.-Tle. | 26,92 | 26,92 | 26,79 | 26,79 |
| A1-2 | Gew.-Tle. | 24,23 | 24,23 | 24,11 | 24,11 |
| A1-3 | Gew.-Tle. | 7,08 | 7,08 | 7,05 | 7,05 |
| A1-4 | Gew.-Tle. | 36,84 | 36,84 | 36,67 | 36,67 |
| A1-5 | Gew.-Tle. | 5,67 | 5,67 | 5,64 | 5,64 |
| A2-1 | Gew.-Tle. | 4,11 | 4,11 | 4,19 | 4,19 |
| A2-2 | Gew.-Tle. | 3,54 | 3,54 | 3,53 | 3,53 |
| A4-2 | Gew.-Tle. | 3,54 | 3,54 | 3,53 | 3,53 |
| A3-2 | Gew.-Tle. | 1,13 | 1,13 | 1,13 | 1,13 |
| A3-1 | Gew.-Tle. | 1,13 | 1,13 | 1,13 | 1,13 |
| **Flammschutzmittel** | | | | | |
| A5-3 (DPK) | Gew.-Tle. | 10,14 | | 10,85 | |
| A5-1 (BDP) | Gew.-Tle. | | | 10,85 | 16,27 |

(fortgesetzt)

| Flammschutzmittel | | | | | |
|---|---|---|---|---|---|
| A5-4 (RDP) | Gew.-Tle. | 10,14 | 20,27 | | |
| A5-5 (TEP) | Gew.-Tle. | | | | 5,42 |
| **Isocyanat** | | | | | |
| B-1 | Gew.-Tle. | 205,52 | 205,52 | 204,54 | 204,54 |
| Index | | 148,5 | 148,5 | 148,5 | 148,5 |
| **Reaktionsparameter** | | | | | |
| Startzeit | Sekunden | 17 | 18 | 17 | 18 |
| Abbindezeit | Sekunden | 35 | 36 | 35 | 36 |
| Steigzeit | Sekunden | 60 | 58 | 58 | 60 |
| Klebfreizeit | Sekunden | 85 | 80 | 80 | 76 |
| **Physikalische Eigenschaften der Schäume** | | | | | |
| Rohdichte | | 41,3 | 42,2 | 40,0 | 40,0 |
| Offenzelligkeit | % | 6,8 | 7,1 | 7,4 | 7,6 |
| Druckfestigkeit in Steigrichtung | kPa | 0,37 | 0,37 | 0,39 | 0,38 |
| Druckfestigkeit senkrecht zur Steigrichtung | kPa | 0,16 | 0,18 | 0,18 | 0,16 |
| Druckfestigkeit/Rohdichte | 1000 m$^2$/s$^2$ | 5,1 | 5,3 | 5,8 | 5,4 |
| Dimensions stabilität @ 100°C | % | 1,3 | 0,9 | 0,3 | 0,5 |

Die erfindungsgemäßen Schaumstoffe 7 und 8 haben im Vergleich zu den Beispielen 5 und 6 günstigere Rohdichten bei gleicher Offenzelligkeit und vergleichbarer Festigkeit. Daraus ergibt sich ein günstigeres Verhältnis von Festigkeit zu Dichte, wenn man Mischungen von BDP einsetzt.

Die Brandeigenschaften wurden nach ISO 5660-1:2015 getestet (Cone Calorimeter Test mit 50 kW/m$^2$ Leistung, Tabelle 3). Alle angegebenen Werte sind Mittelwerte aus zwei Messungen. Die Ergebnisse zeigen, dass die erfindungsgemäßen BDP-basierten Mischungen nicht erfindungsgemäßen RDP und RDP/DPK-Mischungen ebenbürtig sind oder günstigere Ergebnisse ergeben. Dies war auf Basis von US 2014/0066532 nicht zu erwarten.

**Tabelle 3: Brandeigenschaften der Beispiele 5- 8**

| Beispiele | | 5[*] | 6[*] | 7 | 8 |
|---|---|---|---|---|---|
| Zeit bis zum Beginn des Brennens, tti | Sekunden | 4,5 | 3,5 | 4,5 | 5,0 |
| Maximale Wärmefreisetzung, $HRR_{peak}$ | kW/m$^2$ | 262 | 282 | 235 | 248 |
| Gesamte Wärmefreisetzung, THR | MJ/m$^2$ | 22 | 23 | 22 | 21 |
| Wärmefreisetzung/Masseverlust, EHC | MJ/m$^2$g | 2,6 | 2,2 | 2,1 | 2,0 |

**Patentansprüche**

1. Verfahren zur Herstellung von PUR-/PIR-Hartschaumstoffen umfassend die Umsetzung eines Reaktionsgemisches enthaltend

    **A1** eine Isocyanat-reaktive Komponente
    **A2** Treibmittel
    **A3** Katalysator
    **A4** gegebenenfalls Additiv
    **A5** Flammschutzmittel

**B** eine Isocyanatkomponente,

das **dadurch gekennzeichnet ist, dass**

das Flammschutzmittel **A5** mindestens zwei phosphorhaltige Verbindungen enthält, wobei mindestens eine der beiden Verbindungen die allgemeine Formel

$$R^1R^2(O)P\text{-}[O\text{-}R^5\text{-}R^6\text{-}O\text{-}P(O)R^3]_nR^4 \qquad (I)$$

oder

$$R^1R^2(O)P\text{-}[O\text{-}R^5\text{-}X\text{-}R^6\text{-}O\text{-}P(O)R^3]_nR^4 \qquad (II)$$

aufweist, wobei
X = für eine Alkylen-Gruppe, N-$R^7$, O, CO, S, SO, $SO_2$ oder P-$R^7$ steht,
n = für eine ganze Zahl von 0 bis 4 steht,
$R^1$, $R^2$, $R^3$, $R^4$ = jeweils für eine Aryl-O-, Aryl- oder Alkyl-Gruppe steht,
$R^5$, $R^6$ = jeweils für eine Arylen-Gruppe steht,
$R^7$ = für eine Aryl-O-, Aryl- oder Alkyl-Gruppe steht,
wobei die mindestens eine Verbindung mit der allgemeinen Formel (I) oder (II) in einem Oligomerengemisch eingesetzt wird und n im Mittel den Wert $\bar{n}$ = 0,80 bis 4,00 aufweist.

**2.** Verfahren nach Anspruch 1, **dadurch gekennzeichnet, dass** in der Isocyanat-reaktiven Komponente **A1** ein Polyesterpolyol enthalten ist.

**3.** Verfahren nach Anspruch 2, **dadurch gekennzeichnet, dass** in der Isocyanat-reaktiven Komponente **A1** ein Polyesterpolyol und ein Polyetherpolyol mit einem Molekulargewicht jeweils von 50 g/mol bis 2000 g/mol enthalten sind.

**4.** Verfahren nach Anspruch 2 oder 3, **dadurch gekennzeichnet, dass** in der Isocyanat-reaktiven Komponente **A1** ein Polyesterpolyol und ein Polyether mit einer Funktionalität von jeweils 1,0 bis 6,0 enthalten sind.

**5.** Verfahren nach Anspruch 1 bis 4, **dadurch gekennzeichnet, dass** das Treibmittel **A2** ausgewählt ist aus einem oder mehreren Verbindungen der Gruppe bestehend aus halogenfreien chemischen Treibmitteln, halogenfreien physikalischen Treibmitteln und (hydro)fluorierten Olefinen.

**6.** Verfahren nach Anspruch 1 bis 5, **dadurch gekennzeichnet, dass** das Flammschutzmittel **A5** 45,0 Gew.-% bis 95,0 Gew.-%, jeweils bezogen auf die Gesamtmasse des Flammschutzmittels **A5**, eine Verbindung mit der allgemeinen Formel (I) oder (II) enthält.

**7.** Verfahren nach Anspruch 1 bis 6, **dadurch gekennzeichnet, dass** der Anteil einer Verbindung mit der allgemeinen Formel (I) oder (II) 5,0 Gew.-% bis 40,0 Gew.-%, jeweils bezogen auf die Gesamtmasse der Komponenten **A1** bis **A5**, beträgt.

**8.** Verfahren nach Anspruch 1 bis 7, **dadurch gekennzeichnet, dass** das Flammschutzmittel **A5** kein halogenhaltiges Flammschutzmittel enthält.

**9.** Verfahren nach Anspruch 1 bis 8, **dadurch gekennzeichnet, dass** das Flammschutzmittel **A5** eine Verbindung mit der allgemeinen Formel (I) oder (II) enthält, wobei $R^1$, $R^2$, $R^3$ und $R^4$ jeweils für eine Aryl-O-Gruppe stehen.

**10.** Verfahren nach Anspruch 9, **dadurch gekennzeichnet, dass** das Flammschutzmittel **A5** eine Verbindung mit der allgemeinen Formel (I) oder (II) enthält, wobei $R^1$, $R^2$, $R^3$ und $R^4$ jeweils für eine Phenoxy-Gruppe stehen.

**11.** Verfahren nach Anspruch 10, **dadurch gekennzeichnet, dass** Bisphenol A-bis(diphenyl phosphat) enthaltend ist.

**12.** Verfahren nach Anspruch 1 bis 11, **dadurch gekennzeichnet, dass** das Flammschutzmittel **A5** neben einer Verbindung mit der allgemeinen Formel (I) oder (II) ein Flammschutzmittel enthält welches ausgewählt ist aus der Gruppe bestehend aus Diphenylkresylphosphat, Triethylphosphat und roter Phosphor.

**13.** Verfahren nach Anspruch 1 bis 12, **dadurch gekennzeichnet, dass** die Isocyanatkomponente **B** ausgewählt ist aus mindestens einer Verbindung aus der Gruppe bestehend aus MDI, polymeres MDI und TDI.

**14.** PUR-/PIR-Hartschaumstoff, erhältlich nach dem Verfahren gemäß einem der Ansprüche 1 bis 13.

**15.** Verwendung von PUR-/PIR-Hartschaumstoffen nach Anspruch 14 zur Herstellung eines Isolationsmaterials.

**Claims**

**1.** Process for producing rigid PUR/PIR foams comprising reaction of a reaction mixture containing

> **A1** an isocyanate-reactive component
> **A2** blowing agent
> **A3** catalyst
> **A4** optionally additive
> **A5** flame retardant
> **B** an isocyanate component,
> which is **characterized in that**
> the flame retardant **A5** contains at least two phosphorus-containing compounds, wherein at least one of the two compounds has the general formula

$$R^1R^2(O)P\text{-}[O\text{-}R^5\text{-}R^6\text{-}O\text{-}P(O)R^3]_nR^4 \qquad (I)$$

> or

$$R^1R^2(O)P\text{-}[O\text{-}R^5\text{-}X\text{-}R^6\text{-}O\text{-}P(O)R^3]_nR^4 \qquad (II)$$

> wherein
> X represents an alkylene group, N-$R^7$, 0, C0, S, S0, $SO_2$ or P-$R^7$,
> n represents an integer from 0 to 4,
> $R^1$, $R^2$, $R^3$, $R^4$ in each case represents an aryl-0, aryl or alkyl group,
> $R^5$, $R^6$ in each case represents an arylene group,
> $R^7$ represents an aryl-0, aryl or alkyl group,
> wherein the at least one compound having the general formula (I) or (II) is employed in an oligomer mixture and n on average has a value n of 0.80 to 4.00.

**2.** Process according to Claim 1, **characterized in that** the isocyanate-reactive component **A1** contains a polyester polyol.

**3.** Process according to Claim 2, **characterized in that** the isocyanate-reactive component **A1** contains a polyester polyol and a polyether polyol each having a molecular weight of 50 g/mol to 2000 g/mol.

**4.** Process according to Claim 2 or 3, **characterized in that** the isocyanate-reactive component **A1** contains a polyester polyol and a polyether each having a functionality of 1.0 to 6.0.

**5.** Process according to Claims 1 to 4, **characterized in that** the blowing agent **A2** is selected from one or more compounds from the group consisting of halogen-free chemical blowing agents, halogen-free physical blowing agents and (hydro)fluorinated olefins.

**6.** Process according to Claims 1 to 5, **characterized in that** the flame retardant **A5** contains 45.0% by weight to 95.0% by weight, in each case based on the total mass of the flame retardant **A5**, of a compound having the general formula (I) or (II).

**7.** Process according to Claims 1 to 6, **characterized in that** the proportion of a compound having the general formula (I) or (II) is 5.0% by weight to 40.0% by weight in each case based on the total mass of the components **A1** to **A5**.

**8.** Process according to Claims 1 to 7, **characterized in that** the flame retardant **A5** contains no halogen-containing flame retardant.

9. Process according to Claims 1 to 8, **characterized in that** the flame retardant **A5** contains a compound having the general formula (I) or (II), wherein $R^1$, $R^2$, $R^3$ and $R^4$ each represent an aryl-0 group.

10. Process according to Claim 9, **characterized in that** the flame retardant **A5** contains a compound having the general formula (I) or (II), wherein $R^1$, $R^2$, $R^3$ and $R^4$ each represent a phenoxy group.

11. Process according to Claim 10, **characterized in that** bisphenol A bis(diphenylphosphate) is included.

12. Process according to Claims 1 to 11, **characterized in that** in addition to a compound having the general formula (I) or (II) the flame retardant **A5** contains a flame retardant selected from the group consisting of diphenylcresyl phosphate, triethyl phosphate and red phosphorus.

13. Process according to Claims 1 to 12, **characterized in that** the isocyanate component **B** is selected from at least one compound from the group consisting of MDI, polymeric MDI and TDI.

14. Rigid PUR/PIR foam obtainable by the process according to any of Claims 1 to 13.

15. Use of rigid PUR/PIR foams according to Claim 14 for producing an insulation material.

**Revendications**

1. Procédé de fabrication de mousses rigides de PUR/PIR comprenant la réaction d'un mélange réactionnel contenant

   **A1** un composant réactif vis-à-vis des isocyanates
   **A2** un agent d'expansion
   **A3** un catalyseur
   **A4** éventuellement un additif
   **A5** un retardateur de flamme
   **B** un composant isocyanate,

   **caractérisé en ce que**

   le retardateur de flamme **A5** contient au moins deux composés phosphorés, au moins l'un des deux composés ayant la formule générale

   $$R^1R^2(O)P\text{-}[O\text{-}R^5\text{-}R^6\text{-}O\text{-}P(O)R^3]_nR^4 \qquad (I)$$

   ou

   $$R^1R^2(O)P\text{-}[O\text{-}R^5\text{-}X\text{-}R^6\text{-}O\text{-}P(O)R^3]_nR^4 \qquad (II)$$

   dans laquelle
   X représente un groupe alkylène, $N\text{-}R^7$, O, CO, S, SO, $SO_2$ ou $P\text{-}R^7$,
   n représente un nombre entier de 0 à 4,
   $R^1$, $R^2$, $R^3$, $R^4$ représentent chacun un groupe aryl-O-, aryle- ou alkyle,
   $R^5$, $R^6$ représentent chacun un groupe arylène,
   $R^7$ représente un groupe aryl-O-, aryle ou alkyle,
   au moins un composé de formule générale (I) ou (II) étant utilisé dans un mélange d'oligomères et n'ayant en moyenne la valeur $\bar{n}$ = 0,80 à 4,00.

2. Procédé selon la revendication 1, **caractérisé en ce que** le composant **A1** réactif vis-à-vis des isocyanates contient un polyesterpolyol.

3. Procédé selon la revendication 2, **caractérisé en ce que** le composant **A1** réactif vis-à-vis des isocyanates contient un polyesterpolyol et un polyétherpolyol ayant chacun une masse moléculaire de 50 g/mol à 2 000 g/mol.

**4.** Procédé selon la revendication 2 ou 3, **caractérisé en ce que** le composant **A1** réactif vis-à-vis des isocyanates contient un polyester et un polyéther ayant chacun une fonctionnalité de 1,0 à 6,0.

**5.** Procédé selon les revendications 1 à 4, **caractérisé en ce que** l'agent d'expansion **A2** est choisi parmi un ou plusieurs composés du groupe consistant en les agents d'expansion chimiques non halogénés, les agents d'expansion physiques non halogénés et les oléfines (hydro)fluorées.

**6.** Procédé selon les revendications 1 à 5, **caractérisé en ce que** le retardateur de flamme **A5** contient 45,0 % en poids à 95,0 % en poids, dans chaque cas par rapport à la masse totale du retardateur de flamme **A5**, d'un composé de formule générale (I) ou (II).

**7.** Procédé selon les revendications 1 à 6, **caractérisé en ce que** la proportion d'un composé de formule générale (I) ou (II) est de 5,0 % en poids à 40,0 % en poids, dans chaque cas par rapport à la masse totale des composants **A1** à **A5**.

**8.** Procédé selon les revendications 1 à 7, **caractérisé en ce que** le retardateur de flamme **A5** ne contient aucun retardateur de flamme halogéné.

**9.** Procédé selon les revendications 1 à 8, **caractérisé en ce que** le retardateur de flamme **A5** contient un composé de formule générale (I) ou (II) dans laquelle $R^1$, $R^2$, $R^3$ et $R^4$ représentent chacun un groupe aryl-O-.

**10.** Procédé selon la revendication 9, **caractérisé en ce que** le retardateur de flamme **A5** contient un composé de formule générale (I) ou (II), $R^1$, $R^2$, $R^3$ et $R^4$ représentant chacun un groupe phénoxy.

**11.** Procédé selon la revendication 10, **caractérisé en ce que** du bisphénol A-bis(phosphate de diphényle) est présent.

**12.** Procédé selon les revendications 1 à 11, **caractérisé en ce que** le retardateur de flamme **A5** contient, outre un composé de formule générale (I) ou (II), un retardateur de flamme qui est choisi dans le groupe consistant en le phosphate de diphénylcrésyle, le phosphate de triéthyle et le phosphore rouge.

**13.** Procédé selon les revendications 1 à 12, **caractérisé en ce que** le composant isocyanate **B** est choisi parmi au moins un composé du groupe consistant en le MDI, le MDI polymère et le TDI.

**14.** Mousse rigide de PUR/PIR pouvant être obtenue par le procédé selon l'une des revendications 1 à 13.

**15.** Utilisation de mousses rigides de PUR/PIR selon la revendication 14 pour la fabrication d'un matériau isolant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4418307 A1
- US 5268393 A
- US 2014066532 A1
- US 5470891 A
- JP 2007277295 A
- WO 2014039488 A
- US 20140066532 A
- WO 2014055318 A
- US 6054499 A
- EP 2910585 A1
- EP 1359177 A1
- WO 2010043624 A
- EP 1923417 A
- US 2764565 A

**In der Beschreibung aufgeführte Nicht-Patentliteratur**

- Polyurethane. **G.W. BECKER ; D. BRAUN.** Kunststoff Handbuch. Carl Hanser Verlag, 1983, vol. 2, 104-1, 5
- Recent Advances on the Utilization of Nanoclays and Organophosphorus Compounds in Polyurethane Foams for Increasing Flame Retardancy. **J.C. QUAGLIANO ; V.M. WITTEMBERG ; I.C.G. GARCIA.** Structural Nanocomposites, Engineering Materials. Springer Verlag, 2013, vol. 1, 249-258
- **S.V. LEVCHIK ; E.D. WEIL.** A Review of Recent Progress in Phosphorus-based Flame Retardants. *J. Fire Sci.,* 2006, vol. 24, 345-364
- **L. CHEN ; Y.-Z. WANG.** A review on flame retardant technology in China. Part 1: development of flame retardants. *Polym. Adv. Technol.,* 2010, vol. 21, 1-26
- **IONESCU.** Chemistry and Technology of Polyols for Polyurethanes. Rapra Technology Limited, 2005, 55
- Oligo-Polyols for Elastic Polyurethanes. 263
- Polyester Polyols for Elastic Polyurethanes. 321
- Polyether Polyols for Rigid Polyurethane Foams. 419
- Polyester Polyols for Rigid Polyurethane Foams
- Kunststoff-Handbuch. Carl Hanser Verlag, 1993, vol. VII, 267
- Polyurethan Taschenbuch. Carl Hanser Verlag, 2001, 83-102